# EUROPÄISCHE PATENTSCHRIFT

(11) **EP 0 837 573 B1**
(45) Veröffentlichungstag und Bekanntmachung des Hinweises auf die Patenterteilung: **20.07.2005**
(21) Anmeldenummer: 96116733.5
(22) Anmeldetag: 18.10.1996
(51) Int. Cl.: H04H 1/00

(54) **Digitale Schaltung zur Erkennung eines modulierten Trägers**
Digital circuit for detecting a modulated carrier
Circuit numérique pour détecter une porteuse modulée

(43) Veröffentlichungstag der Anmeldung: 22.04.1998
(73) Patentinhaber: Micronas GmbH, 79108 Freiburg (DE)
(72) Erfinder: Winterer, Martin, Dipl.-Phys., 79194 Gundelfingen (DE); Hilpert, Thomas, Dipl.-Ing., 79211 Denzlingen (DE); Müller, Stefan, Dipl.-Ing., 79108 Freiburg (DE)

(56) Entgegenhaltungen:
- DE-A- 4 239 994
- US-A- 4 356 350
- US-A- 4 597 107
- US-A- 5 450 622

## Beschreibung

Die Erfindung betrifft eine digitale Schaltung zur Erkennung eines Trägers, der mit einem bandbegrenzten Signal moduliert ist. Derartige Schaltungen sind unter anderem bei Fernseh- oder Audiosignalempfängern bekannt. Sie erzeugen ein Steuer- oder Stummschaltsignal, wenn ein nichtempfangswürdiger Träger erkannt wird, um beim Kanalwechsel oder unter ungünstigen Empfangsbedingungen die Lautstärkeregelung soweit zurückzunehmen, daß der Hörer nicht durch ein lautes Rauschen oder ein gestörtes Signal belästigt wird. Eine andere Anwendung, bei der die Erkennung derartiger Träger von Interesse ist, stellen Signale dar, die innerhalb des übertragenen Signals mittels eines oder mehrere Hilfsträger zusätzliche analoge oder digitale Informationen übertragen, beispielsweise als Differenzsignal (="L-R"-Signal) beim Stereo-Multiplexsignal, als eine ein- oder mehrkanalige Toninformation bei verschiedenen Fernsehübertragungsstandards, z.B. beim "NICAM"-System, als ein Autofahrer-Radio-Informations-Kennungssignal "ARI", als ein Radio-Daten-Signal "RDS" und als andere.

Bei aktuellen Übertragungssystemen wird die Übertragung zusätzlicher Informationen zum eigentlichen Signal immer wichtiger. Eine besondere Rolle spielt hierbei die Quadraturmodulation eines Trägers, weil sie für die zusätzliche Übertragung von Informationen, insbesondere die Übertragung digitaler Daten, bestens geeignet ist. In der Regel wird dabei die Phase eines Trägers gegenüber einer festen Bezugsphase moduliert. Für die Übertragung digitaler Daten erfolgt die Phasenmodulation dabei quantisiert, also in festen Phasenschritten. Es gibt auch Anwendungen, bei denen die Amplitude des Trägers moduliert wird oder verschiedene Modulationsarten miteinander kombiniert werden, beispielsweise die Phasen- mit der Amplitudenmodulation. In vielen Fällen ist es wichtig, daß für die weitere Verarbeitung der Signale erkannt wird, ob in dem empfangenen Signal überhaupt ein mit einem bandbegrenzten Signal modulierter Träger vorliegt oder nicht, wobei die Soll-Frequenzlage des Trägers innerhalb des Signals vorgegeben ist. Von der Erkennung des modulierten Trägers werden dann weitere Verfahrenschritte in der jeweiligen Empfangsschaltung abhängig gemacht. Wenn beispielsweise bei einemAutoempfänger kein Verkehrsfunkträger erkannt wird, dann wird der automatische Suchlauf weiter geschaltet, obwohl der gerade empfangene Sender mit guter Audio-Qualtität zu empfangen wäre.

Die Demodulation und Dekodierung der mit dem jeweiligen Träger verkoppelten Information erfolgt bei aktuellen Schaltungen der bekannten Vorteile wegen weitgehend digital und/oder mit Hilfe programmierbarer Prozessoren. Dies kann auch eine digitale Umsetzung der Frequenzen miteinschließen. Ein derartiges Beispiel für eine digitale Schaltungsanordnung zur Demodulierung und Dekodierung eines Multipexsignals in einem Stereoempfänger ist in EP-A 0 609 666 beschrieben. Ferner wird dort aus der digital ermittelten Amplitude des Pilotsignals ein Steuersignal zur Erkennung der Empfangsqualität abgeleitet. Über digitale Umsetzungsschaltungen wird dabei das Pilotsignal in die Basisbandlage überführt und dort mittels eines Tiefpasses herausgefiltert. Eine anschließende Schwellwertschaltung bewertet die Amplitude und bildet das Steuersignal. Die Bestimmung der Amplitude erfolgt über eine Quadraturumsetzung des Pilotsignals mit anschließender Berechnung der Zeigerlänge aus einer Quadrierung und Summierung der beiden Quadraturkomponenten.

Die Erfassung des modulierten Träger wäre an sich auch mittels eines digitalen Bandpasses möglich, dessen Durchlaßbereich etwa der Bandbreite des modulierten Trägers entspricht. Dieses Verfahren erfordert jedoch einen relativ aufwendigen digitalen Bandpaß. Ferner ist von Nachteil, daß unter Umständen Fremdsignale in diesem Frequenzbereich einen modulierten Träger vortäuschen können, so daß die Erkennungschaltung ein falsches Ausgangssignal liefern würde. Eine Abhilfe wäre ein noch selektiveres Bandfilter, das jedoch durch einen noch höheren Aufwand erkauft werden müßte.

In US-A 4 356 350 ist eine analoge FM-Stereo-Empfängerschaltung nach dem Schalterprinzip beschrieben, die beim Vorhandensein von Stör- oder Rauschsignalen den Empfang von Stereosignalen zugunsten von Monosignalen durch eine steuerbare Verstärkungsregelung abschwächt, wobei die Höhe der Stör- oder Rauschsignale das Maß der Abschwächung bestimmt. Ob Stör- oder Rauschsignale im bandbegrenzten Signal vorhanden sind, wird nach der Frequenzumsetzung in an sich signalfreien Frequenzbereichen des Basisbandes überprüft. Oberhalb des Nutzbandes, das bis etwa 53 kHz reicht, werden diese Signale mittels eines Hochpassfilters erfasst, gleichgerichtet und tiefpassgefiltert. Mit dem Gleichpegel dieses Signals wird über den steuerbaren Verstärkungsregler das ausgangsseitige Mischungsverhältnis zwischen dem Mono- und dem Stereosignal bestimmt. Die Empfangerschaltung ist größtenteils monolithisch integrierbar, ausgenommen ist hiervon jedoch das Hochpassfilter, ein dreistufiges RC-Kettenfilter mit einer Grenzfrequenz von 60 kHz, das extern zugeschaltet ist.

Es ist daher Aufgabe der Erfindung, eine möglichst einfache digitale Schaltung zur Erkennung eines mit einem bandbegrenzten Signal modulierten Trägers anzugeben, wobei die Schaltung gegenüber Fremd- und Störsignalen möglichst unempfindlich sein soll. Die Schaltung soll auch als kleiner Zusatz für monolithisch integrierte Prozessoren mitintegrierbar sein.

Die Aufgabe wird entsprechend den Merkmalen des Anspruchs 1 durch eine digitale Schaltung mit folgenden Teilschaltungen gelöst:
- einer Demodulationseinrichtung (5), der ein Hochpaß (6) nachgeschaltet ist, dessen Durchlaßbereich im wesentlichen oberhalb des bandbegrenzten Signals (5.4) liegt, wobei das bandbegrenzte Signal (5.4) mittels der Demodulationseinrichtung (5) in eine Basisband- oder eine tiefe Frequenzlage umgesetzt ist, und
- einer Bewertungsschaltung (7), die mit dem Ausgang des Hochpasses (6) gekoppelt ist und an deren Ausgang ein Erkennungssignal (7.5) für den modulierten Träger (tr) und/oder das bandbegrenzte Signal (5.4) abnehmbar ist.

Ein Vorteil der Erfindung besteht darin, daß Funktionseinheiten vorhandener Demodulationseinrichtungen in den jeweiligen Signalprozessoren für den Erkennungszweck mitverwendet werden können, so daß nur wenig zusätzliche Funktionseinheiten für die Erkennungsschaltung erforderlich sind. Die zusätzlichen Funktionseinheiten sind dabei sehr einfach, so daß der gesamte Flächenaufwand bei einer monolithischen Integration klein gehalten werden kann. Weitere vorteilhafte Ausgestaltungen ergeben sich aus den Unteransprüchen.

Die Erfindung und vorteilhafte Ausgestaltungen werden nun anhand der Figuren der Zeichnung näher erläutert.:
Fig. 1 zeigt als Blockschaltbild ein Ausführungsbeispiel der Erfindung und
Fig. 2 zeigt schematisch zugehörige Frequenzspektren,
   a) mit einem modulierten Träger und
   b) ohne einen modulierten Träger.

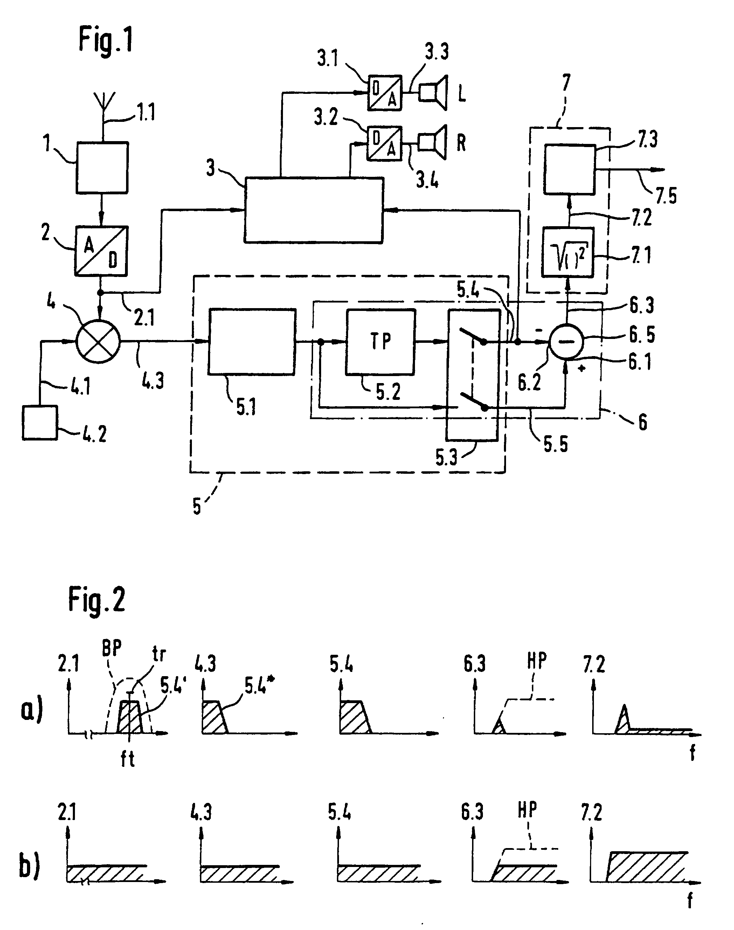

Bei der Schaltung nach Fig. 1 ist als Anwendungsbeispiel anzunehmen, daß es sich bei dem modulierten Träger tr um den frequenzmodulierten Hilfsträger eines Stereo-Multiplexsignals handelt und daß das Erkennungssignal 7.5 einer Stereoumschalt- oder einer Stummschaltfunktion dient. Eine Hochfrequenzempfangseinrichtung 1 empfängt ein hochfrequent übertragenes Signal 1.1 und setzt es gegebenenfalls nach einer von dem jeweiligen Übetragungsverfahren abhängigen Demodulation oder Dekodierung aus dem Hochfrequenzbereich in einen tieferen Frequenzbereich um. Am zweckmäßigsten erfolgt dabei die Umsetzung in das Basisband. Nach der Frequenzumsetzung erfolgt die Digitalisierung mittels eines Analog/Digital-Umsetzers 2. Das digitale Ausgangssignal 2.1 mit dem Summen-Signal "R+L" ist weiteren Schaltungsteilen 3, 3.1, 3.2 zugeführt, die letztendlich ein analoges R- und L-Signal für die beiden Tonwiedergabeeinrichtungen 3.3, 3.4 erzeugen.

Da bei den üblichen Stereo-Multipexsignalen - bezogen auf das Basisband - die Mittenfrequenz ft des modulierten Hilfsträger tr (im Folgenden kurz mit "Träger" bezeichnet) bei 38 kHz liegt, wird der frequenzmodulierte Träger tr mittels eines digitalen Mischers 4 in seine Bassisbandlage oder eine tiefe Frequenzlage umgesetzt. Das zugehörige digitale Umsetzungssignal 4.1 wird mittels eines digitalen Oszillators 4.2 gebildet. Das Ausgangssgnal 4.3 des digitalen Mischers 4 ist einer digitalen Demodulationseinrichtung 5 zugeführt, die im Ausführungsbeispiel von Fig 1 einer üblichen digitalen FM-Demodulationseinrichtung entspechen soll. Eine digitale Schaltung zur FM-Demodulation ist beispielsweise aus EP-A 0 161 325 (ITT-Case: C-DIT-1219 EP) bekannt. Die einzelnen FM-Demodulationsstufen sind in Fig. 1 vereinfachend als ein Schaltungsblock 5.1 dargestellt und nur ein abschließender Tiefpaß 5.2 und eine Dezimierungsstufe 5.3 werden als separate Schaltungsblöcke abgebildet. Am Ausgang des Tiefpasses 5.2 oder an dem zugehörigen Ausgang der Dezimierungsstufe 5.3 ist das demodulierte Signal 5.4 (in Fig. 1 ist es ein Stereo-Differenzsignal, das auch als "L-R"-Signal bezeichnet wird) abgreifbar, das zur weiteren Verarbeitung der Stufe 3 zugeführt ist.

Die Erfindung geht davon aus, daß sich bei einem bandbegrenzten Eingangssignal 4.3 auch nach der Demodulationseinrichtung 5 wieder ein bandbegrenztes Ausgangssignal 5.4 ergibt. Falls kein mit einem bandbegrenzten Signal modulierter Träger tr im Eingangssignal 4.3 vorhanden ist, ist auch das Ausgangssignal 5.4 nicht bandbegrenzt, vergl. die Spektren von Fig. 2b. Das Signal 5.4 enthält in diesem Fall ein weißes oder gefärbtes Rauschen, aus dem mehr oder weniger einzelne Störsignale heraustreten. Solange die Abtastrate hoch genug ist, kann entsprechend der Erfindung mittels einer geeigneten Hochpaßfilterung des Ausgangssignals 5.4 aus dem Signal- oder Rauschpegel außerhalb des Nutzsignalbereiches festgestellt werden, ob die Demodulationseinrichtung 5 einen modulierten Träger tr erfaßt hat oder ob in dem Eingangssignal 4.3 ein modulierter Träger nicht enthalten war. Bei dem Ausführungsbeispiel von Fig. 1 in Verbindung mit einem üblichen Stereo-Multiplexsignal kann ein Hochpaßfilter 6, dessen Durchlaßbereich alles erfaßt was oberhalb von 15 kHz liegt, diejenigen Signalanteile ermitteln, die in einem bandbegrenzten Signal 5.4 (das sich im Ausführungsbeispiel etwa von 30 Hz bis 15 kHz erstrecken würde) eigentlich nicht enthalten sein dürften. Wenn das Hochpaßfilter 6 im Vergleich zum Tiefpaßfilter 5.2 ein ähnlich großes Ausgangssignal liefert, dann ist davon auszugehen, daß kein modulierter Träger im Signal 4.3 vorhanden ist. FM-Demodulatoren, die auf keinen Träger eingerastet sind oder die keinen Träger gefunden haben, neigen zudem dazu, am Ausgang ein starkes Rauschsignal abzugeben, was die Auswertung nach der Erfindung begünstigt.

Dem Hochpaß nach der Erfindung entspricht in Fig. 1 der Schaltungsblock 6, dessen Ausgangssignal 6.3 einer Bewertungsschaltung 7 zugeführt ist, deren Ausgangssignal 7.3 das gesuchte Erkennungssignal ist. Der Hochpaß 6 kann eine eigene Schaltung sein, der das Ausgangssignal 5.4 des Demodulators 5 zugeführt ist. In Fig. 1 werden für den Hochpaß 6 jedoch zweckmäßigerweise Schaltungsteile der Demodulationseinrichtung 5 mitverwendet, nämlich ein zu einer Dezimierungsstufe 5.3 gehöriger Tiefpaß 5.2. Durch Differenzbildung des Ein- und Ausgangssignales 5.5 bzw. 5.4 mittels eines Subtrahierers 6.2 wird ein einfaches Hochpaßfilter 6 gebildet. Dies ist möglich, wenn das Tiefpaßfilter 5.2 linearphasig ist. In den anderen Fällen ist statt des Subtrahierers 6 eine aufwendigere Kombinationsschaltung erforderlich. Selbstverständlich kann auch ein anderes Tiefpaßfilter in der Demodulationseinrichtung 5 für die Realisierung des Hochpasses 6 mitverwendet werden, sofern sein Ausgangssignal ein bandbegrenztes, mit dem jeweiligen Träger tr verkoppeltes Signal in Basisbandlage oder sehr tiefer Frequenzlage liefert. Das Signal muß dabei nicht einmal demoduliert sein.

Für die Bewertungsschaltung 7 des Signals 6.3 ist es zweckmäßig, wenn sie eine Leistungsbewertung oder ähnlich wirkende Bewertung im gesamten Frequenzbereich durchführt, weil dann schmalbandige aber relativ große Störsignale gegenüber dem relativ breiten Modulationsband in den Hintergrund treten. Dies erlaubt eine sichere Unterscheidung zwischen einem schmalbandigen Signal, z.B. auch gegenüber einem unmodulierten Träger, und einem mit einem bandbegrenzten Signal modulierten Träger. Für den Hochpaß 6 ist die richtige Lage der Selektionsflanke wichtig, weil die Bandgrenze des Signals 5.4 und die Selektionsflanke möglichst dicht beieinader liegen sollen und sich allenfalls nur geringfügig überlappen dürfen, vergl. das Spektrum 6.3 von Fig. 2a. Diese Bedingung ist im Ausführungsbeispiel von Fig. 1 zwangsweise erfüllt, weil der Tiefpaß 5.2 und die zugehörige Dezimierungsstufe 5.3 das Signal 5.4 im Nutzsignalbereich nicht beschränken darf, siehe hierzu in Fig. 2a die Spektren der Signale 5.4 und 6.3. Die Digitalisierungsrate ist in Fig. 1 so hoch, daß sie für die weitere Verarbeitung des Signals 5.4 in der Dezimierungsstufe 5.3 um den Faktor 6 reduziert werden kann.

In der Bewertungsschaltung 7 wird eine dem Energie- oder Leistungswert des Hochpaßsignals 6.3 entsprechende Bewertungsgröße gebildet, beispielsweise mittels einer Quadraturschaltung und/oder eines Wurzelbildners 7.1 (=RMS-Schaltung) oder noch einfacher mittels einer Gleichrichtschaltung. Ein sich daran anschließender Schwellwertdetektor löst je nach Lage der Schaltschwelle das Erkennungssignal 7.5 für den modulierten Träger tr aus. Gegebenenfalls können in der Bewertungsschaltung 7 auch die leistungsbezogenen Ausgangssignale des Tief- und Hochpasses 5.2 bzw. 6 miteinander verglichen und ausgewertet werden.

Die Fig. 2 zeigt zur Funktionsbeschreibung der Schaltung von Fig. 1 schematisch einige Signalspektren. Die Bezugszeichen an den jeweiligen Koordinaten beziehen sich dabei auf die mit den gleichen Bezugszeichen versehenen Signale von Fig. 1. In der Zeile a) sind dabei diejenigen Spektren dargestellt, die zu einem modulierten Träger tr gehören. Entsprechend sind in der Zeile b) diejenigen Spektren dargestellt, die zu einem unmodulierten oder nicht vorhanden Träger gehören. Die Darstellung berücksichtigt dabei nicht, daß es sich um digitale und nicht analoge Signale handelt.

Die Spektren der Zeile a) lassen die Bandbegrenzung der dargestellten Signale erkennen. Beim Signal 2.1 ist der modulierte Träger tr in der Mittenfrequenzlage ft und das ihn umgebende Signal 5.4' dargestellt. Die jeweilige Modulationsart ändert an der grundsätzlichen Spektrumsform nichts. Eine gestrichelte Linie BP gibt den Duchlaßbereich eines Bandfilters an, mit dem das Vorhanden- oder Nichtvorhandensein des modulierten Trägers tr üblicherweise ermittelt wird. Das Spektrum 4.3 zeigt den Träger tr und das zugehörige Signal 5.4* in der Basisbandlage. Beim Signal 5.4* kann es sich entsprechend dem als Beispiel angenommenen Stereo-Mulitplexsignal immer noch um ein frequenzmoduliertes Signal L-R handeln. Die erforderliche Frequenzdemodulation ist beim nachfolgenden Spektrum 5.4 erfüllt. Im Falle eines Stereo-Multiplexsignal stellt das digitale Signal 5.4 das Differenzsignal in Basisbandlage dar. Dieses Signal 5.4 wird hochpaßgefiltert und das Ergebnis zeigt das Spektrum 6.3. Die Selektionsflanke des Hochpasses ist dabei durch die unterbrochene Linie HP dargestellt. Ein kleiner Bereich des Basisbandspektrums 5.4 wird dabei vom Hochpaß noch miterfaßt. Schließlich zeigt das Spektrum 7.2 die Situation nach der Gewichtung in der Bewertungsschaltung 7. Bis auf den relativ kleinen Außreißer an der Bandgrenze bleibt das Signal 7.2 im gesamten Frequenzbereich auf einem relativ niederen Pegel. Der sich daraus ergebene Leistungswert bleibt damit so niedrig, daß die Schaltschwelle im Schwellwertdetektor 7.3 nicht überschritten wird. Die Spektren der Zeile b) zeigen demgegenüber im Durchlaßbereich des Hochpasses HP einen gleichförmigen und nicht mehr vernachlässigbaren Signalpegel, der insbesondere ein weißes Rauschen darstellt. Durch die Einbeziehung des Hochpaß-Ausgangssignals in die Erkennungsschaltung wird gegenüber bisherigen Schaltungen die Erkennungssicherheit, ob in einem stark verrauschten Signal 4.3 ein modulierte Träger tr vorhanden oder nicht vorhanden ist, deutlich verbessert.

## Patentansprüche

1. Digitale Schaltung zur Erkennung eines Trägers (tr) innerhalb eines von einer Signalquelle (4) gelieferten Eingangssignals (4.3), wobei der Träger (tr) mit einem bandbegrenzten Signal (5.4; 5.4') moduliert ist, mit folgenden Teilschaltungen:
- einer Demodulationseinrichtung (5), der ein Hochpass (6) nachgeschaltet ist, dessen Durchlassbereich im wesentlichen oberhalb des bandbegrenzten Signals (5.4; 5.4') liegt, wobei das bandbegrenzte Signal mittels der Demodulationseinrichtung (5) in eine Basisband- oder eine tiefe Frequenzlage umgesetzt ist, und
- einer Bewertungsschaltung (7), die an einen Hochpass (6) gekoppelt ist, der mit dem in die Basisband- oder in die tiefe Frequenzlage umgesetzten bandbegrenzten Signal (5.4) gespeist ist und an dessen Ausgang ein Erkennungssignal (7.5) für den modulierten Träger (tr) und/oder das bandbegrenzte Signal (5.4; 5.4') abnehmbar ist,
**dadurch gekennzeichnet, dass**
- der Hochpass (6) mittels eines monolithisch mitintegrierten Tiefpasses (5.2) und einer eine Differenz bildenden Kombinationsschaltung (6.5) gebildet ist,
- der Tiefpass (5.2) mit dem demodulierten und in die Basisband- oder tiefe Frequenzlage umgesetzten bandbegrenzten Signal (5.4) gespeist ist,
- die Bandbreite des Tiefpasses (5.2) durch die Bandbreite des bandbegrenzten Signals (5.4) bestimmt ist,
- der Minundeingang (+) der Kombinationsschaltung (6.5) mit dem Eingang des Tiefpasses (5.2) und der Subtrahendeingang (-) mit dem Ausgang des Tiefpasses (5.2) verbunden sind,
- das Ausgangssignal der Kombinationsschaltung (6.5) der Bewertungsschaltung (7) als hochpassgefiltertes Signal (6.3) zugeführt ist, wobei die Bewertung durch den Vergleich des Ausgangssignals des Hochpaßfilters (6) mit dem Ausgangssignal (5.4) des Tiefpassfilters (5.2) erfolgt

2. Erkennungsschaltung nach Anspruch 1, **dadurch gekennzeichnet, daß** der Tiefpass (5.2) linearphasig ist und die Kombinationsschaltung einen Subtrahierer (6.5) enthält, dessen Minuend- bzw. Subtrahendeingang (6.1, 6.2) mit dem Eingang bzw. Ausgang des Tiefpasses (5.2) verkoppelt ist.

3. Erkennungsschaltung nach Anspruch 2, **dadurch gekennzeichnet, daß** die Bewertungsschaltung (7) aus dem Ausgangssignal (6.3) der Kombinationsschaltung (6.5) eine dem Leistungswert entsprechende Berwertungsgröße mittels einer Leistungserfassungsstufe (7.1) ermittelt.

4. Erkennungsschaltung nach Anspruch 3, **dadurch gekennzeichnet, daß** die Leistungserfassungsstufe eine Quadraturschaltung und/oder einen Wurzelbildner (7.1) enthält.

5. Erkennungsschaltung nach Anspruch 4, **dadurch gekennzeichnet, daß** die Leistungserfassungsstufe (7.1) eine Gleichrichteinrichtung für negative Signale enthält.

6. Erkennungsschaltung nach einem der Ansprüche 1 bis 6, **dadurch gekennzeichnet, daß** die Bewertungsschaltung (7) einen Schwellwertdetektor (7.2) enthält.

7. Erkennungsschaltung nach einem der Ansprüche 1 bis 6, **dadurch gekennzeichnet, daß** die Demodulationseinrichtung (5) einen Frequenz- und/oder Amplituden- und/oder Phasen-Demodulator für das den Träger (tr) modulierende bandbegrenzte Signal (5.4; 5.4') enthält.

## Claims

1. A digital circuit for detecting a carrier (tr) in an input signal (4.3) provided by a signal source (4), the carrier (tr) being modulated with a band-limited signal (5.4; 5.4'), said digital circuit comprising the following subcircuits:
- a demodulation facility (5) followed by a high-pass filter (6) whose passband lies essentially above the band-limited signal (5.4; 5.4'), the band-limited signal being converted by means of the demodulation facility (5) to a baseband frequency or a low frequency; and
- a weighting circuit (7) coupled to the output of the high-pass filter (6) which is fed with the band-limited signal (5.4) converted to the baseband frequency or the low frequency, and providing at its output a detection signal (7.5) indicating the presence of the modulated carrier (tr) and/or the band-limited signal (5.4; 5.4'),
**characterized in**
- **that** the high-pass filter (6) is implemented with an on-chip low-pass filter (5.2) and a difference-forming combination circuit (6.5),
- **that** the low-pass filter (5.2) is fed with the demodulated band-limited signal (5.4) converted to the baseband or the low frequency,
- **that** the bandwidth of the low-pass filter (5.2) is determined by the bandwidth of the band-limited signal (5.4),
- **that** the minuend input (+) of the combination circuit (6.5) is connected to the input of the low-pass filter (5.2), while the subtrahend input (-) is connected to the output of the low-pass filter (5.2), and
- **that** the output signal of the combination circuit (6.5) is fed as a high-pass-filtered signal (6.3) to the weighting circuit (7), the weighting being performed by comparing the output signal of the high-pass filter (6) with the output signal (5.4) of the low-pass filter (5.2).

2. A detection circuit as claimed in claim 1, **characterized in that** the low-pass filter (5.2) has a linear phase-response characteristic, and that the combination circuit comprises a subtractor (6.5) having its minuend and subtrahend inputs (6.1, 6.2) coupled to the input and output, respectively, of the low-pass filter (5.2).

3. A detection circuit as claimed in claim 2, **characterized in that** the weighting circuit (7) determines a quantity corresponding to the power value from the output signal (6.3) of the combination circuit (6.5) by means of a power-measuring stage (7.1).

4. A detection circuit as claimed in claim 3, **characterized in that** the power-measuring stage comprises a squaring circuit and/or a root extractor (7.1).

5. A detection circuit as claimed in claim 4, **characterized in that** the power-measuring stage (7.1) comprises a rectifying device for negative signals.

6. A detection circuit as claimed in any one of claims 1 to 6, **characterized in that** the weighting circuit (7) comprises a threshold detector (7.3).

7. A detection circuit as claimed in any one of claims 1 to 6, **characterized in that** the demodulation facility (5) comprises a frequency and/or amplitude and/or phase demodulator for the band-limited signal (5.4; 5.4') modulating the carrier (tr).

## Revendications

1. Circuit numérique pour la reconnaissance d'une porteuse (tr) dans un signal d'entrée (4.3) qui est fourni par une source de signaux (4) et dans lequel la porteuse (tr) est modulée au moyen d'un signal à limite de bande (5.4 ; 5.4'), ledit circuit comportant les circuits partiels suivants :
- un dispositif de démodulation (5) qui est branché après un filtre passe-haut (6) dont la bande passante se trouve essentiellement au dessus du signal à limite de bande (5.4 ; 5.4'), le signal à limite de bande (5.4 ; 5.4') étant transformé, au moyen du dispositif de démodulation (5), en une bande de base ou en une fréquence basse et
- un circuit d'évaluation (7) qui est couplé avec un filtre passe-haut (6), qui est alimenté par le signal à limite de bande (5.4) qui est transformé en une bande de base ou en une fréquence basse, et à la sortie duquel on peut prélever un signal de reconnaissance (7.5) pour la porteuse modulée (tr) et/ou le signal à limite de bande (5.4 ; 5.4'),
**caractérisé en ce que**
- le filtre passe-haut (6) est formé au moyen d'un filtre passe-bas (5.2) monolithique intégré et d'un circuit de combinaison (6.5) qui forme une différence,
- le filtre passe-bas (5.2) est alimenté par le signal à limite de bande (5.4) qui est démodulé et converti en une bande de base ou en une fréquence basse,
- la largeur de bande du filtre passe-bas (5.2) est déterminée par la largeur de bande du signal à limite de bande (5.4),
- l'entrée de diminuende (+) du circuit de combinaison (6.5) est reliée à l'entrée du filtre passe-bas (5.2) et l'entrée soustractive (-) du circuit de combinaison (6.5) est reliée à la sortie du filtre passe-bas (5.2),
le signal de sortie du circuit de combinaison (6.5) est envoyé en tant que signal filtré par un filtre passe-haut au circuit d'évaluation (7), l'évaluation étant réalisée par la comparaison du signal de sortie du filtre passe-haut (6) avec le signal de sortie (5.4) du filtre passe-bas (5.2).

2. Circuit de reconnaissance selon la revendication 1, **caractérisé en ce que** le filtre passe-bas (5.2) est à phase linéaire et **en ce que** le circuit de combinaison comprend un soustracteur (6.5) dont l'entrée de diminuende et l'entrée soustractive sont respectivement couplées à l'entrée et à la sortie du filtre passe-bas (5.2).

3. Circuit de reconnaissance selon la revendication 2, **caractérisé en ce que** le circuit d'évaluation (7) élabore, à partir du signal de sortie (6.3) du circuit de combinaison (6.5), une valeur d'évaluation correspondant à la valeur de la puissance au moyen d'un étage de saisie de la puissance (7.1).

4. Circuit de reconnaissance selon la revendication 3, **caractérisé en ce que** l'étage de saisie de la puissance comprend un circuit en quadrature et/ou un circuit de formation de la racine carrée (7.1).

5. Circuit de reconnaissance selon la revendication 4, **caractérisé en ce que** l'étage de saisie de la puissance (7.1) comprend un dispositif de redressement pour les signaux négatifs.

6. Circuit de reconnaissance selon l'une quelconque des revendications 1 à 5, **caractérisé en ce que** l'étage de saisie de la puissance (7.1) comprend un détecteur de valeur de seuil (7.2).

7. Circuit de reconnaissance selon l'une quelconque des revendications 1 à 6, **caractérisé en ce que** le dispositif de démodulation (5) comprend un démodulateur en fréquence et/ou en amplitude et/ou en phase pour le signal à limite de bande (5.4 ; 5.4') qui module la porteuse (tr).
